(19) Europäisches Patentamt
European Patent Office
Office européen des brevets

(11) EP 1 651 085 B1

(12) **EUROPEAN PATENT SPECIFICATION**

(45) Date of publication and mention
of the grant of the patent:
**10.01.2007 Bulletin 2007/02**

(51) Int Cl.:
***A47J 31/54*** *(2006.01)*    ***A47J 31/46*** *(2006.01)*

(21) Application number: **04740726.7**

(86) International application number:
**PCT/EP2004/007410**

(22) Date of filing: **07.07.2004**

(87) International publication number:
**WO 2005/013783 (17.02.2005 Gazette 2005/07)**

(54) **ESPRESSO COFFEE MACHINE OF VERTICAL TYPE WITH SEVERAL DISPENSING UNITS**

VERTIKALE KAFFEE-ESPRESSO-MASCHINE MIT MEHREREN AUSGABEEINHEITEN

MACHINE A CAFE EXPRESSO DE TYPE VERTICAL PRESENTANT PLUSIEURS UNITES DE DISTRIBUTION

(84) Designated Contracting States:
**AT BE BG CH CY CZ DE DK EE ES FI FR GB GR HU IE IT LI LU MC NL PL PT RO SE SI SK TR**

(30) Priority: **24.07.2003 IT VE20030033**

(43) Date of publication of application:
**03.05.2006 Bulletin 2006/18**

(73) Proprietor: **Elektra S.R.L.**
**31030 Dosson di Casier (IT)**

(72) Inventor: **FREGNAN, Andrea**
**I-31030 Dosson di Casier (IT)**

(74) Representative: **Piovesana, Paolo**
**Via F. Baracca, 5/a**
**30173 Venezia-Mestre (IT)**

(56) References cited:
**EP-A- 0 034 127         GB-A- 920 387**

## Description

The present invention relates to an espresso coffee machine of vertical type with several dispensing units.

Espresso coffee machines are known comprising two or more dispensing units, the function of which is to contain the coffee powder and enable a controlled stream of hot water to pass therethrough in order to generate the coffee infusion. Known coffee machines also provide additional services such as the production of hot water (for example to prepare tea, etc.) and steam (for example to prepare cappuccino and to heat liquids).

Generally, a good coffee machine must provide a series of services linked to largely contrasting requirements which do not always enable a satisfactory compromise to be achieved.

A fundamental parameter for defining the performance of a coffee machine is its capacity, in terms of the number of coffees which can be produced per unit of time, and the quantity of hot water and steam generated per unit of time for other services.

Evidently, the greater the machine capacity the larger its boiler, and the greater the required installed electric power. However a limit on the increase in boiler dimensions is given by the overall size of the coffee machine, which for obvious reasons must be as small as possible. In limiting the overall machine size, the boiler size necessarily becomes small, as does the size of the electrical resistance heater installed in its interior. With a small boiler it is difficult to achieve high capacity, unless resistance elements of high specific load are used, and which may be of unusual shapes besides being costly and difficult to mount and remove.

If instead a boiler is to be used having a size compatible with the desired capacity of the coffee machine but still with a limited overall size thereof, the internal space not occupied by the boiler becomes excessively reduced and such as not to enable all the other components (electric pump, solenoid valves, distributor, electronic equipment, etc.) to be housed.

In seeking to achieve a satisfactory compromise between the contrasting requirements which a coffee machine is required to satisfy, the coffee machine is generally given a horizontally extending parallelepiped shape with a cylindrical boiler positioned within the machine with its axis horizontal, in order to present a good water/steam separation surface. However this solution is not satisfactory if the boiler is to be housed in a machine of vertically extending cylindrical shape.

The problem is solved according to the invention by an espresso coffee machine of vertical type with at least two dispensing units, as described in claim 1.

A preferred embodiment of the present invention is described in detail hereinafter with reference to the accompanying drawings, in which:

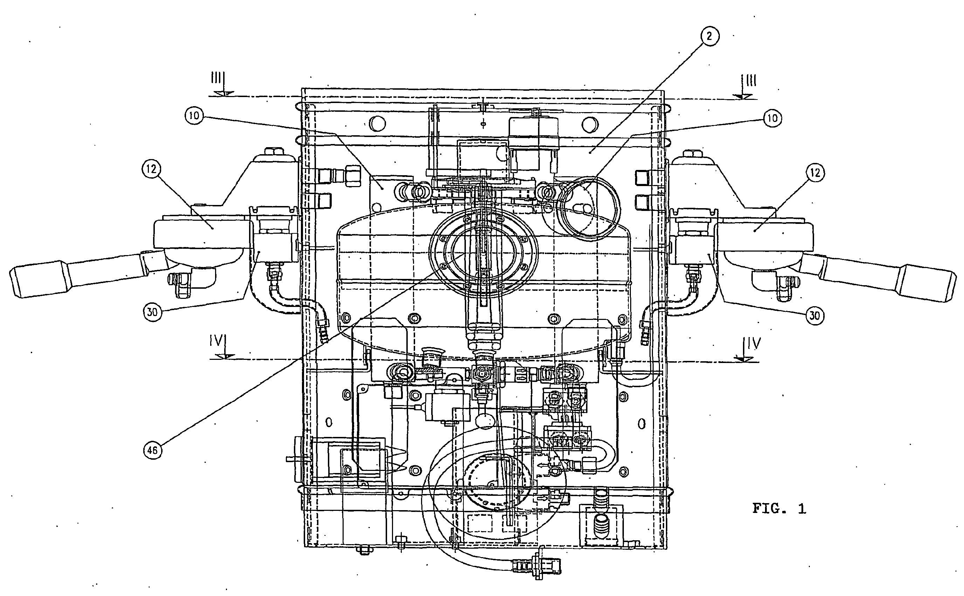

Figure 1    is a partial vertical section through a coffee machine according to the invention,

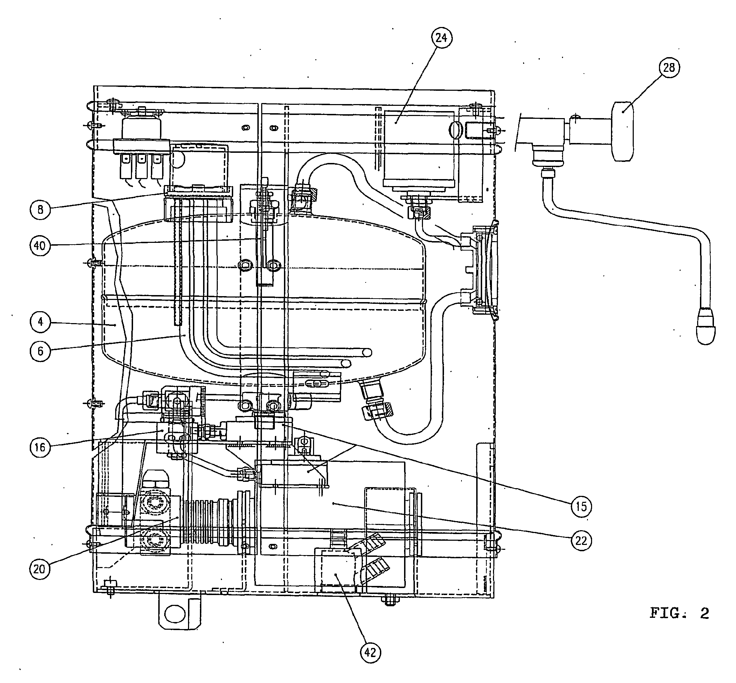

Figure 2    is a vertical section therethrough perpendicular to the preceding,

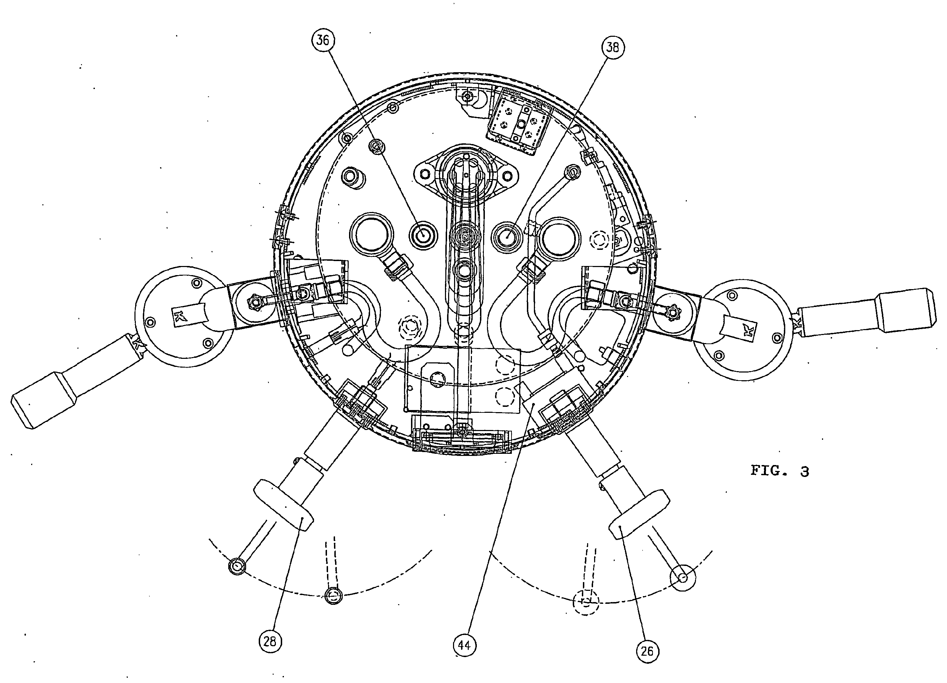

Figure 3    is a horizontal section therethrough on the line III-III of Figure 1, and

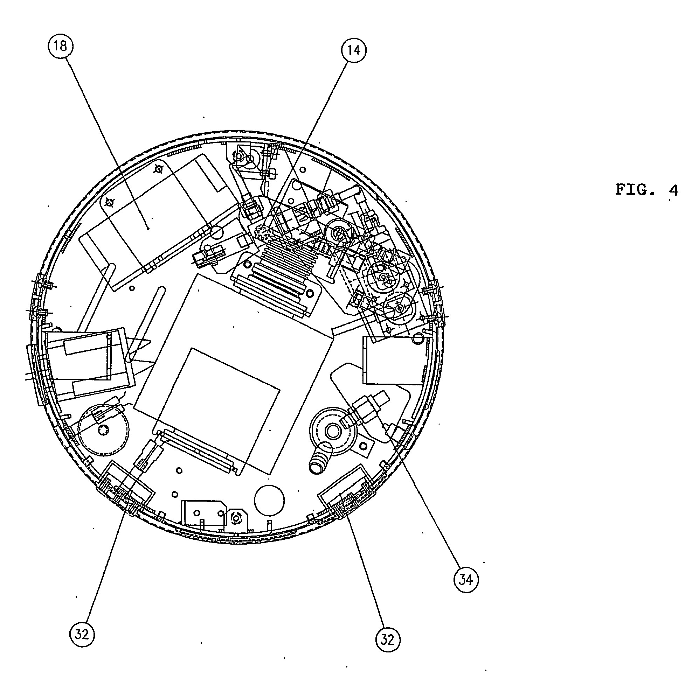

Figure 4    is a horizontal section therethrough on the line IV-IV of Figure 1.

As can be seen from the figures, the coffee machine of the invention comprises a substantially cylindrical containing structure 2 of vertical axis, extending lowerly into a base for resting on a support surface (not shown), which for example can be dome-shaped and comprise a compartment for heating coffee cups.

Inside the containing structure 2 there is provided a boiler 4 for producing the hot water and steam required for preparing coffee, tea, cappuccino, for heating liquids, and generally for all those functions typical of a bar machine.

Traditional control and safety members, such as a safety valve 36, a bleed valve 38 and a level control probe 40, are applied to the boiler 4.

Internally, the boiler 4 houses a series of armoured electrical resistance elements 6, applied to the upper wall of the boiler by a traditional flange 8 and L-shaped, with a first portion extending vertically and a second portion extending horizontally a short distance from the base of the boiler. Each resistance element 67 is provided with a safety thermostat with contacting bulb.

Inside the boiler 4 there are provided a number of heat exchangers 10 equal to the number of dispensing units of the machine, namely two dispensing units 12 in the illustrated example, hence in the boiler 4 there are provided two heat exchangers 10, to which an expansion valve 34 is connected. These are grazed by the water and steam contained in the boiler 4 and are connected at their inlet end to a water distribution header 14 and to the respective dispensing unit 12, and at their outlet end to the respective dispensing unit 12 in such a manner as to form a natural circulation ring. With each dispensing unit there is associated a flowmeter for the quantity dispensed for each coffee.

The boiler 4 is fed via a solenoid valve 16 by the header 14, the inlet side of which is connected to a bladed positive-displacement pump 20 connected at its suction side directly to the water main and driven by an electric motor 22. The pump must have a capacity of at least 100 l/h and preferably 220 l/h, and a pressure of at least 8 bar and preferably 15 bar.

The boiler 4 is provided with a pressure switch 24 maintaining the internal pressure at the predetermined value, and is also connected to a first hot water dispensing cock 26 and to a second steam dispensing cock 28, for the scheduled machine uses.

As stated, in its interior the boiler 4 contains two heat exchangers 10, one for each dispensing unit 12. The two heat exchangers 10 are immersed into the boiler water and are directly connected at their inlet side to corresponding outlets of the distributor 18 and to the respective dispensing units, and at their outlet side to the respective dispensing units 12 in order to form a natural circulation ring. The solenoid valves 30 are operated by a corresponding pushbutton unit 32 provided on the front of the machine in a position easily accessible to the operator, to dispense the water for preparing the coffees.

The machine also comprises an electronic control unit for controlling the flowmeter 15 associated with each dispensing unit and for controlling the water level in the boiler, via the probe 40 and the solenoid valve 16. It finally comprises a pressure indicator for measuring the pressure in the boiler 4 and the pressure downstream of the pump 20, and an external viewing gauge showing the water level in the boiler.

This assembly of components must evidently be housed within the containing structure 2 in the space not occupied by the boiler 4, their location being such as to allow easy and independent accessibility, both to enable the machine to be assembled and to allow any maintenance and replacement work.

This is achieved by suitably choosing the diameter $\varphi$ and height H of the containing structure 2, an the volume V and evaporating surface S of the boiler, these being related to each other and to the power P absorbed by the electrical resistance elements 6 by the relationships:

$$H = 0.28\varphi + 4.05$$

$$3 < \varphi < 5$$

$$0.28 < P/\varphi^2 < 0.34$$

$$0.19 < V/\varphi^3 < 0.23$$

$$0.46 < S/\varphi^2 < 0.57$$

The lower value 0.28 of the ratio $P/\varphi^2$ is critical in the sense that lower values would not enable sufficient thermodynamic capacity of the machine to be obtained, with consequent long water heating times and insufficient water and steam quantities available at the required times. At the same time the upper value 0.34 of that ratio must be considered critical in the sense that higher values would involve the use of electrical resistance elements 6 which would be excessively stressed or of shape and dimensions such as to be excessively costly and unsuitable for assembly and maintenance.

The ratio $V/\varphi^3$ essentially expresses, ignoring constant values, the ratio between the volume of the boiler 4 and the volume of the containing structure 2 which houses it. The lower value 0.19 is critical in the sense that lower values would result in insufficient thermodynamic capacity, given the limited volume of the boiler 4 and the consequently insufficient space intended for the resistance elements 6. At the same time the upper value 0.23 for that parameter is critical in the sense that higher values would allow a larger boiler to be provided, but would excessively reduce the internal space of the containing structure 2 intended to house all the other machine components, to the extent that they could not be contained.

The ratio $S/\varphi^2$ expresses, ignoring constant values, the ratio between the evaporating surface for the water contained in the boiler 4 and the area of the horizontal section through the container 2.

The lower value 0.46 is critical in the sense that lower values would result in insufficient production of superheated steam at the required temperature. At the same time the upper value is critical in the sense that higher values would excessively reduce the space within the containing structure available to the other machine components; in addition the steam quantity to be produced would require excessively high-power electrical resistance elements for its production.

**Claims**

1. Espresso coffee machine of vertical type with at least two dispensing units, comprising within a substantially cylindrical containing structure (2) of diameter $\varphi$ and height H a boiler (4) of power P, volume V and evaporating surface S for producing hot water and steam, at least one electrical resistance element (8), an expansion valve (34), a safety valve (36), a heat exchanger (10) for heating the feed water to each dispensing unit (12), a water delivery pump (20), an electric motor (22) for operating said pump, a pressure switch (24) for controlling the pressure within the boiler, a pushbutton unit (32) for controlling the dispensing of each dispensing unit, a header (14) for distributing water to the various users, a solenoid valve (16) feeding water to the boiler and a discharge manifold (42) for water from the dispensing units (12) and from the water and steam dispensing cocks, **characterised in that** the boiler (4) is cylindrical with its axis vertical, its geometrical characteristics being related to the geometrical characteristics of said containing structure (2) by the following relationships:

$$H = 0.28\varphi + 4.05$$

$$3 < \varphi < 5$$

$$0.28 < P/\varphi^2 < 0.34$$

$$0.19 < V/\varphi^3 < 0.23$$

$$0.46 < S/\varphi^2 < 0.57$$

in which H and $\varphi$ are expressed in dm, P in Kw, V in $dm^3$ and S in $dm^2$.

2. A coffee machine as claimed in claim 1, **characterised in that** the resistance element (6) housed in the boiler (4) is L-shaped, with a horizontal portion fixed upperly to the top of said boiler and with the vertical portion extending in proximity to the base thereof.

3. A coffee machine as claimed in claim 1, **characterised in that** the boiler (4) is provided with a probe (40) for controlling the water level within it.

4. A coffee machine as claimed in claim 1, **characterised in that** the electric motor (22) is of induction type and is provided with a starting capacitor.

5. A coffee machine as claimed in claim 1, **characterised in that** the positive-displacement pump (20) is of bladed type.

6. A coffee machine as claimed in claim 5, **characterised in that** the bladed positive-displacement pump (20) has a minimum capacity of 100 l/h.

7. A coffee machine as claimed in claim 5, **characterised in that** the positive-displacement pump (20) has a head not less than 8 bar.

8. A coffee machine as claimed in claim 1, **characterised in that** the electrical resistance element (6) is provided with a safety thermostat with contacting bulb.

9. A coffee machine as claimed in claim 1, **characterised in that** a flowmeter for the quantity dispensed per individual coffee is associated with each dispensing unit (12).

10. A coffee machine as claimed in claims 3 and/or 9, **characterised by** comprising an electronic unit (18) for controlling the amounts of coffee dispensed by each dispensing unit (12) and the water level in the boiler (4).

11. A coffee machine as claimed in claim 1, **characterised by** being provided with a pressure gauge (44) for controlling the pressures of the boiler (4) and of the pump (20).

12. A coffee machine as claimed in claim 1, **characterised by** comprising an external viewer (46) for the water level in the boiler (4).

**Patentansprüche**

1. Espresso-Kaffeemaschine vertikalen Typs mit mindestens zwei Ausgabeeinheiten, umfassend innerhalb einer im Wesentlichen zylindrischen Aufnahmestruktur (2) mit Durchmesser $\varphi$ und Höhe H einen Boiler (4) mit Leistung P, Volumen V und Evaporationsoberfläche S zur Erzeugung von heißem Wasser und Dampf, mindestens ein elektrisches Widerstandselement (8), ein Expansionsventil (34), ein Sicherheitsventil (36), einen Wärmeübertrager (10) zum Erhitzen des Zufuhrwassers für jede Ausgabeeinheit (12), eine Wasserförderpumpe (20), einen Elektromotor (22) zum Betreiben der Pumpe, einen Druck-Schalter (24) zum Regeln des Drucks innerhalb des Boilers, eine Tastschaltereinheit (32) zum Steuern der Ausgabe jeder Ausgabeeinheit, ein Verteilerteil (14) zum Verteilen von Wasser an die verschiedenen Benutzer, ein elektromagnetisches Ventil (16), das dem Boiler Wasser zuleitet, und ein Abflusssammler (42) für Wasser aus den Ausgabeeinheiten (12) und aus den Wasser- und Dampfverteilerhähnen, **dadurch gekennzeichnet, dass** der Boiler (4) zylindrisch mit vertikaler Achse ist, wobei seine geometrischen Eigenschaften in Bezug zu den geometrischen Eigenschaften der Aufnahmestruktur (2) stehen, und zwar mittels der folgenden Verhältnisse:

$$H = 0.28\varphi + 4.05$$

$$3 < \varphi < 5$$

$$0.28 < P/\varphi^2 < 0.34$$

$$0.19 < V/\varphi^3 < 0.23$$

$$0.46 < S/\varphi^2 < 0.57$$

wobei H und φ in dm ausgedrückt werden, P in Kw, V in dm$^3$ und S in dm$^2$.

2. Kaffeemaschine nach Anspruch 1, **dadurch gekennzeichnet, dass** das im Boiler (4) untergebrachte Widerstandselement (6) L-förmig ist, mit einem horizontalen Abschnitt, der oben am oberen Teil des Boilers befestigt ist, und mit dem vertikalen Abschnitt, der sich in der Nähe der Basis desselben erstreckt.

3. Kaffeemaschine nach Anspruch 1, **dadurch gekennzeichnet, dass** der Boiler (4) mit einer Sonde (40) zum Kontrollieren des Wasserstands innerhalb desselben ausgestattet ist.

4. Kaffeemaschine nach Anspruch 1, **dadurch gekennzeichnet, dass** der Elektromotor (22) induktiver Art ist und mit einem Anlaufkondensator ausgestattet ist.

5. Kaffeemaschine nach Anspruch 1, **dadurch gekennzeichnet, dass** die Verdrängerpumpe (20) Flügel aufweist.

6. Kaffeemaschine nach Anspruch 5, **dadurch gekennzeichnet, dass** die mit Flügeln versehene Verdrängerpumpe (20) eine Mindestkapazität von 100 1/Std. besitzt.

7. Kaffeemaschine nach Anspruch 5, **dadurch gekennzeichnet, dass** die Verdrängerpumpe (20) einen Druck von nicht unter 8 bar hat.

8. Kaffeemaschine nach Anspruch 1, **dadurch gekennzeichnet, dass** das elektrische Widerstandselement (6) mit einem Sicherheitsthermostat mit Kontaktbirne ausgestattet ist.

9. Kaffeemaschine nach Anspruch 1, **dadurch gekennzeichnet, dass** ein Durchflussmesser für die pro einzelnem Kaffee ausgegebene Menge zu jeder Ausgabeeinheit (12) gehört.

10. Kaffeemaschine nach Anspruch 3 und/oder 9, **dadurch gekennzeichnet, dass** diese eine Elektronikeinheit (18) zum Steuern der von jeder Ausgabeeinheit (12) ausgegebenen Kaffeemengen und des Wasserstands im Boiler (4) umfasst.

11. Kaffeemaschine nach Anspruch 1, **dadurch gekennzeichnet, dass** diese mit einem Druckmesser (44) zum Regeln der Drücke des Boilers (4) und der Pumpe (20) ausgestattet ist.

12. Kaffeemaschine nach Anspruch 1, **dadurch gekennzeichnet, dass** diese ein externes Sichtteil (46) für den Wasserstand im Boiler (4) aufweist.

## Revendications

1. Machine à café expresso de type vertical présentant au moins deux unités de distribution, comprenant une structure principale sensiblement cylindrique (2) de diamètre φ et de hauteur H, une chaudière (4) de puissance P, de volume V et de surface d'évaporation S pour produire de l'eau chaude et de la vapeur, au moins un élément de résistance électrique (8), une soupape d'expansion (34), une soupape de sûreté (36), un échangeur thermique (10) pour chauffer l'eau fournie à chaque unité de distribution (12), une pompe d'alimentation en eau (20), un moteur électrique (22) pour faire fonctionner ladite pompe, un interrupteur de pression (24) pour contrôler la pression dans la chaudière, une unité de bouton poussoir (32) pour contrôler la distribution de chaque unité de distribution, une tête (14) pour distribuer l'eau aux divers utilisateurs, une valve à solénoïde (16) alimentant la chaudière en eau et un collecteur de décharge (42) pour l'eau provenant des unités de distribution (12) et des buses de distribution d'eau et de vapeur, **caractérisée en ce que** la chaudière (4) est cylindrique avec un axe vertical, ses caractéristiques géométriques étant liées aux caractéristiques géométriques de ladite structure principale (2) par les relations suivantes :

$$H = 0,28 \ \varphi + 4,05$$

$$3 < \varphi < 5$$

$$0,28 < P/\varphi^2 < 0,34$$

$$0,19 < V/\varphi^3 < 0,23$$

$$0,46 < S/\varphi^2 < 0,57$$

dans lesquelles H et φ sont exprimés en dm, P en kW, V en dm$^3$, et S en dm$^2$.

2. Machine à café comme revendiqué dans la revendication 1, **caractérisée en ce que** l'élément de résistance (6) inclus dans la chaudière (4) est en forme de L, avec une partie horizontale fixée par le dessus au haut de ladite chaudière et avec une partie verticale s'étendant à proximité de la base de celle-ci.

3. Machine à café comme revendiqué dans la revendication 1, **caractérisée en ce que** la chaudière (4) est équipée d'une sonde (40) pour contrôler le niveau d'eau à l'intérieur de celle-ci.

4. Machine à café comme revendiqué dans la revendication 1, **caractérisée en ce que** le moteur électrique (22) est de type à induction et est pourvu d'un condensateur de démarrage.

5. Machine à café comme revendiqué dans la revendication 1, **caractérisée en ce que** la pompe volumétrique (20) est de type à lamelles.

6. Machine à café comme revendiqué dans la revendication 5, **caractérisée en ce que** la pompe volumétrique à lamelles (20) a une capacité minimale de 100 1/h.

7. Machine à café comme revendiqué dans la revendication 5, **caractérisée en ce que** la pompe volumétrique à lamelles (20) a une tête qui n'est pas inférieure à 8 bar.

8. Machine à café comme revendiqué dans la revendication 1, **caractérisée en ce que** l'élément de résistance électrique (6) est pourvu d'un thermostat de sûreté avec une ampoule de contact.

9. Machine à café comme revendiqué dans la revendication 1, **caractérisée en ce qu'**un débitmètre de la quantité dispensée pour un café individuel est associé à chaque unité de distribution (12).

10. Machine à café comme revendiqué dans les revendications 3 et/ou 9, **caractérisée en ce qu'**elle comprend une unité électronique (18) pour contrôler les quantités de café distribuées par chaque unité de distribution (12) et le niveau d'eau dans la chaudière (4).

11. Machine à café comme revendiqué dans la revendication 1, **caractérisée en ce qu'**elle est pourvue d'une jauge de pression (44) pour contrôler les pressions de la chaudière (4) et de la pompe (20).

12. Machine à café comme revendiqué dans la revendication 1, **caractérisée en ce qu'**elle est pourvue d'un viseur externe (46) pour le niveau de l'eau dans la chaudière (4).

EP 1 651 085 B1

FIG. 1

FIG. 2

FIG. 3

FIG. 4